# EUROPEAN PATENT APPLICATION

(11) **EP 0 811 922 A1**
(43) Date of publication of application: **10.12.1997**
(21) Application number: 97302325.2
(22) Date of filing: 04.04.1997
(51) Int. Cl.: G06F 13/12, G06F 9/38

(54) **Peripheral device control**

(30) Priority: 05.06.1996 GB 9611715
(71) Applicant: INTERNATIONAL COMPUTERS LIMITED, Putney, London, SW15 1SW (GB)
(72) Inventor: Inglis, Graham Donald, Altrincham, Cheshire WA14 2EU (GB); McKinstry, Adrian Albert, Leigh, Lancashire WN7 3LP (GB)
(74) Representative: Guyatt, Derek Charles

(57) **Abstract**

A data processing system includes a processing unit, a memory, and a peripheral device, interconnected by a bus. The peripheral device includes a command register. The peripheral device has a direct mode of operation in which it executes a command in the command register and then waits for another command to be loaded into said command register from the processing unit, and a dynamic mode of operation in which it automatically fetches a sequence of commands from the memory into the command register and executes each of those commands in turn. First and second mode-switching commands in the command register switch the peripheral device from the direct mode into the dynamic mode, and vice versa.

## Description

### Background to the Invention

This invention relates to the control of peripheral devices in a processor system, such as a microprocessor system.

It is known for a processor to control a peripheral device by means of a command register in the peripheral. Whenever the processor writes a command into the command register, the peripheral decodes the command, executes it, and then waits for another command to be written. However, a problem with this is that it ties up the processor, especially if long, complicated sequences of commands are to be executed by the peripheral.

It is also known to provide a peripheral device with its own program control unit, which can fetch and execute complex sequences of instructions in response to a single command from the processor. This frees up the processor to perform other useful work while the peripheral is executing the command. However, a problem with this is that it provides less direct control over the peripheral.

The object of the present invention is to overcome these problems.

### Summary of the Invention

According to the invention there is provided a peripheral device comprising:
(a) a command register;
(b) a memory;
(c) mode control means for selecting between a direct mode of operation and a dynamic mode of operation for the peripheral device;
(d) means operative in said direct mode of operation, for executing a command in said command register and then waiting for another command to be loaded externally into said command register;
(e) means operative in said dynamic mode of operation for automatically fetching a sequence of commands from said memory into said command register and executing each of those commands in turn;
(f) means operative in said direct mode of operation, in response to a first mode-switching command in said command register, for switching the peripheral device from the direct mode into the dynamic mode; and
(g) means operative in said dynamic mode of operation, in response to a second mode-switching command in said command register, for switching the peripheral device from the dynamic mode into the direct mode.

### Brief Description of the Drawings

Figure 1 is a block diagram of a data processing node embodying the present invention.

Figure 2 is a block diagram of a diagnostic control module (DCM) forming part of the data processing node .

Figure 3 is a flow chart showing the operation of the DCM.

### Description of an Embodiment of the Invention

One data processing node embodying the present invention will now be described by way of example with reference to the accompanying drawings.

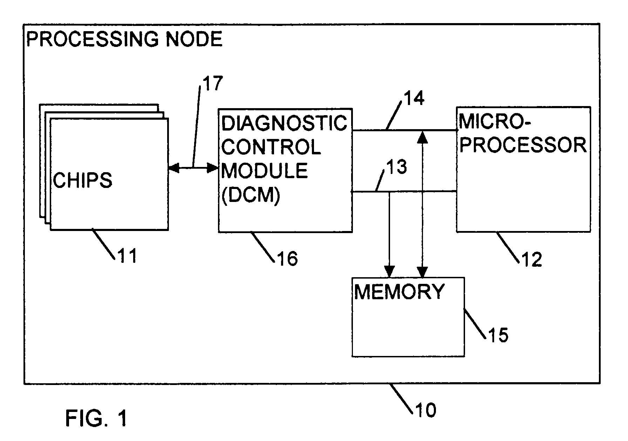

Referring to Figure 1, the data processing node 10 comprises a number of chips 11, which provide the main functionality of the node. These chips 11 may, for example, include processor chips, communications chips, and so on. The exact nature of these chips forms no part of the present invention.

The node 10 also includes a microprocessor 12, which acts as a diagnostic and control processor for the node. The microprocessor 12 has an address bus 13 and data bus 14, which are connected to a memory 15 and to a peripheral unit referred to as the diagnostic control module (DCM) 16. The DCM is, in turn, connected to the chips 11 by way of respective standard JTAG (Joint Test Action Group) interfaces 17 as specified in IEEE 1149.1. Each of the chips 11 includes a JTAG circuit which allows access to all the logic within that unit for diagnostic purposes.

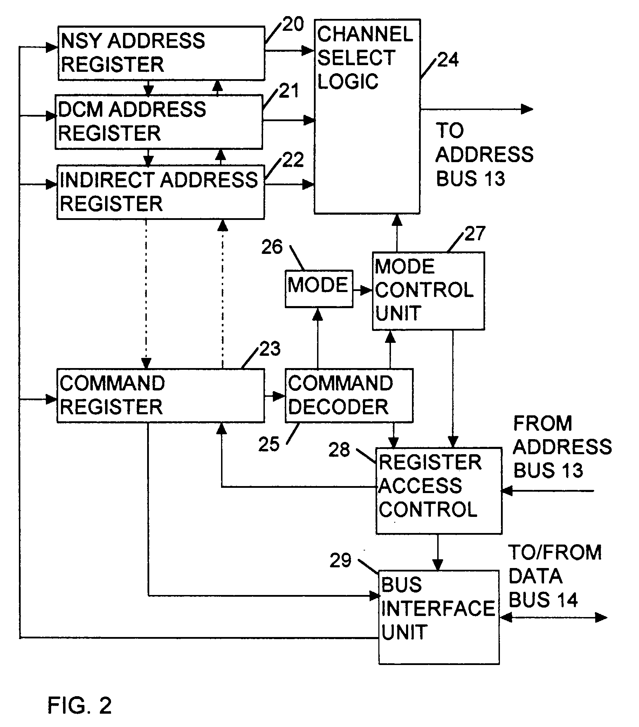

Figure 2 shows the DCM in more detail. The DCM has a number of internal registers, including an NSY address register 20, a DCM address register 21, an Indirect address register 22, and a command register 23. Other internal registers (not shown) in the DCM include: a JTAG context register for selecting the JTAG circuit that is to be accessed; data transfer registers for transferring data between the DCM and the selected JTAG circuit; and data length registers for indicating the number of bytes to be transferred.

The DCM includes channel select logic 24, a command decoder 25, a mode flip-flop 26, a mode control unit 27, a register access control unit 28, and a bus interface unit 29. The DCM also includes transfer control circuits (not shown) for controlling transfer of data between the data transfer registers and the JTAG circuits.

The address registers 20-22 are connected to the microprocessor address bus 13 by way of the channel select logic 24, which can select any of the address registers for addressing the memory 15.

The bus interface unit 29 connects the microprocessor data bus 14 to the data inputs of all the DCM's internal registers, allowing data from the memory 15 to be written into any selected register. The bus interface unit 29 also connects the data outputs of all the DCM's internal registers to the microprocessor data bus 14, allowing data to be read from any selected one of the registers and to be written into the memory 15. The register access controller 28 controls selection of the registers for reading or writing.

The DCM has two modes of operation referred to as direct mode and dynamic mode, the current mode being indicated by the mode flip-flop 26. In the direct mode, the microprocessor can read or write any of the internal registers of the DCM, addressing the registers directly over the address bus 13. In this mode, if a command is written into the command register 23, the DCM executes the command and then waits for the next command to be loaded. In the dynamic mode, the DCM automatically fetches and executes a series of commands stored in the microprocessor memory 15.

The command set of the DCM includes the following.

Start Dynamic Mode. This switches the DCM into dynamic mode. If the DCM is already in dynamic mode, this command has no effect. This command assumes that the NSY address register 20 has previously been loaded with the address of the first command to be performed in dynamic mode.

End Dynamic Mode. This switches the DCM into direct mode. If the DCM is already in direct mode, this command has no effect.

Read DCM Register. This selects one of the DCM's internal registers as a source register, reads the contents of this register, and performs a direct memory access (DMA) to write the data from the source register into the memory. The source register is identified by a code in the command. The memory address into which the data is to be written is assumed to have been previously loaded into the DCM address register.

Write DCM Register. This performs a direct memory access (DMA) to read data from a memory location, selects one of the DCM's internal registers as a destination register, and writes the data from the memory into this register. The destination register is identified by a code in the command. The memory address from which the data is to be read is assumed to have been previously loaded into the NSY address register.

The DCM can also perform a variety of other commands, such as reading and writing specified JTAG registers in a selected one of the chips 11. For simplicity, these other commands will not be described here.

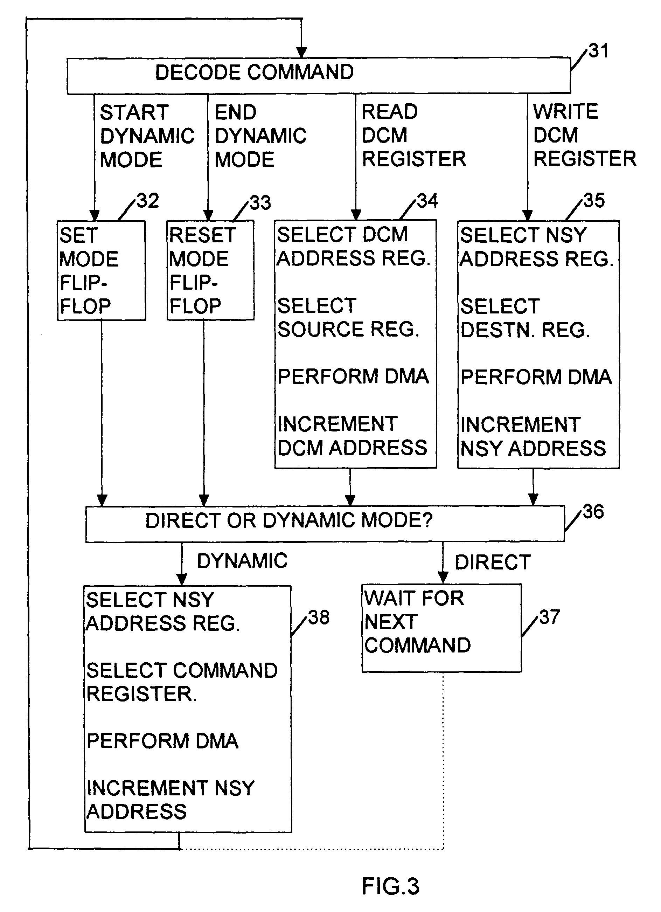

The operation of the DCM will now be described with reference to Figure 3.

(Step 31) Whenever a new command is loaded into the command register 23, it is decoded by the command decoder 25.

(Step 32) If the command is a Start Dynamic Mode command, the command decoder sets the mode flip-flop 26, to indicate that the DCM is now in dynamic mode.

(Step 33) If the command is an End Dynamic Mode command, the command decoder resets the mode flip-flop 26, to indicate that the DCM is now in direct mode.

(Step 34) If the command is a Read DCM Register command, the channel select logic 24 is set so as to select the DCM address register 21 for addressing the memory over the address bus 13. At the same time, the register access controller 28 selects one of the DCM's internal registers, as specified in the command, as a source register. A DMA operation is then performed, so as to read data from the selected source register, and to write the data into the addressed location of the memory, by way of the data bus 14. The DCM address register is then incremented, to point to the next data location in the memory.

(Step 35) If the command is a Write DCM Register command, the channel select logic 24 is set so as to select the NSY address register 20 for addressing the memory over the address bus 13. At the same time, the register access controller 28 selects one of the DCM's internal registers, as specified in the command, as a destination register. A direct memory access (DMA) operation is then performed, so as to read data from the addressed location of the memory, by way of the data bus 14, and to write the data into the selected destination register. The NSY address register is then incremented, to point to the next data location in the memory.

(Step 36) Following execution of any of the above commands, the mode control unit checks the mode flip-flop to find out whether the DCM is in direct mode or dynamic mode.

(Step 37) If the DCM is in direct mode, it now waits for the next command to be loaded into the command register. When the next command is loaded, the DCM returns to Step 31 above, so as to decode and execute the new command.

(Step 38) If, on the other hand, the DCM is in dynamic mode, the channel select logic 24 is set so as to select the NSY address register 20 for addressing the memory over the address bus 13. At the same time, the register access controller 28 selects the command register as a destination register. A DMA operation is then performed, so as to read a command out of the addressed location of the memory, by way of the data bus 14, and to write the command into the command register. The NSY address register is then incremented, to point to the next data location in the memory. The DCM then immediately returns to Step 31 above, so as to decode and execute the new command.

In summary, it can be seen that, in the direct mode, the microprocessor can load a command into the command register; the DCM executes this command, and then waits for the next command to be loaded. In the dynamic mode, on the other hand, the DCM automatically fetches a sequence of commands from the microprocessor memory 15 and executes them.

It should be noted that, in the case of the Write DCM Register command, the NSY address register acts both as a program counter for addressing commands, and as an address register for addressing data. In this case, therefore, commands and data are interleaved in the memory, so that each Write DCM Register command is followed by the data to be written. The NSY address register is automatically incremented after each write, so as to point to the next command or data as the case may be. There are also other commands (not described here for simplicity) which cause the DCM to use the Indirect Address Register for addressing the data, so that in this case the commands and data do not need to be interleaved, but can be at separate locations in the memory 15.

The advantage of the dynamic mode is that it decouples the microprocessor from complicated sequences of commands that may be required to be performed by the DCM. This frees the microprocessor to do other tasks such as handling communications. More importantly, it means that the sequence executed by the DCM is always executed under the same conditions, without the possibility of being suspended by microprocessor interrupts which could produce unexpected results. It also means that each sequence for the DCM is automatically recorded in the microprocessor memory, which makes diagnosis of problems easier. A further advantage is that command sequences for the DCM can be pre-compiled and checked prior to use. The advantage of providing Direct Mode in addition to Dynamic Mode is that it allows direct access to the internal registers of the DCM which in some cases can be more efficient and useful, and it also eases the initial validation of both the chip and the driving software.

### Some possible modifications

It will be appreciated that many modifications may be made to the system described above without departing from the scope of the present invention. Also, although the invention has been described in the context of a diagnostic control module, it may also be used in controlling other forms of peripheral device.

## Claims

1. A peripheral device comprising:
(a) a command register (23);
(b) a memory (15);
(c) mode control means (26,27) for selecting between a direct mode of operation and a dynamic mode of operation for the peripheral device;
(d) means (37) operative in said direct mode of operation, for executing a command in said command register and then waiting for another command to be loaded externally into said command register;
(e) means (38) operative in said dynamic mode of operation for automatically fetching a sequence of commands from said memory into said command register and executing each of those commands in turn;
(f) means (32) operative in said direct mode of operation, in response to a first mode-switching command in said command register, for switching the peripheral device from the direct mode into the dynamic mode; and
(g) means (33) operative in said dynamic mode of operation, in response to a second mode-switching command in said command register, for switching the peripheral device from the dynamic mode into the direct mode.

2. A peripheral device according to Claim 1 wherein said mode control means comprises a flip-flop circuit (26).

3. A peripheral device according to Claim 1 or 2 wherein said means for automatically fetching a sequence of commands from said memory into said command register comprises:
(a) a command address register (20);
(b) means for using the command address register to address said memory to read out a command therefrom into said command register; and
(c) means for incrementing said command address register.

4. A peripheral device according to Claim 3 further including means (35) operative in response to a write command in said command register, for using said command address register (20) to address said memory, writing data to said memory, and then automatically incrementing said command address register.

5. A peripheral device according to any preceding claim further including:
(a) a data address register (21); and
(b) means (34) operative in response to a read command in said command register, for using the data address register to address said memory for reading data from said memory.

6. A peripheral device according to Claim 5 further including means for automatically incrementing said data address register after said memory is addressed.

7. A data processing system comprising:
(a) a processing unit (12);
(b) a memory (15) connected to said processing unit;
(c) a peripheral device (16) connected to said processing unit and to said memory, said peripheral device comprising:
(i) a command register (23) into which the processing unit can write commands;
(ii) mode control means (26, 27) for selecting between a direct mode of operation and a dynamic mode of operation for the peripheral device;
(iii) means (37) operative in said direct mode of operation, for executing a command in said command register and then waiting for another command to be loaded externally into said command register by said processing unit;
(iv) means (38) operative in said dynamic mode of operation for automatically fetching a sequence of commands from said memory into said command register and executing each of those commands in turn;
(v) means (32) operative in said direct mode of operation, in response to a first mode-switching command in said command register, for switching the peripheral device from the direct mode into the dynamic mode; and
(vi) means (33) operative in said dynamic mode of operation, in response to a second mode-switching command in said command register, for switching the peripheral device from the dynamic mode into the direct mode.

8. A data processing system according to Claim 6 or 7 wherein said mode control means comprises a flip-flop circuit (26).

9. A data processing system according to any one of Claims 6 to 8 wherein said means for automatically fetching a sequence of commands from said memory into said command register comprises:
(a) a command address register (20);
(b) means for using the command address register to address said memory to read out a command therefrom into said command register; and
(c) means for incrementing said command address register.

10. A data processing system according to Claim 9 further including means (35) operative in response to a write command in said command register, for using said command address register (20) to address said memory, writing data into said memory, and then automatically incrementing said command address register.

11. A data processing system according to any one of Claims 6 to 10 further including:
(a) a data address register (21); and
(b) means (34) operative in response to a read command in said command register, for using the data address register (21) to address said memory for reading data from said memory.

12. A data processing system according to Claim 11 further including means for automatically incrementing said data address register after said memory is addressed.
